# EUROPEAN PATENT SPECIFICATION

(11) **EP 1 911 199 B1**
(45) Date of publication and mention of the grant of the patent: **12.12.2018**
(21) Application number: 06753325.7
(22) Date of filing: 30.06.2006
(51) Int. Cl.: H04L 12/24, G08C 17/02

(54) **SYSTEM COMPRISING A MASTER UNIT AND A PLURALITY OF SLAVE UNITS FOR OPERATING A PLURALITY OF DEVICES**
SYSTEM MIT EINER MASTER-EINHEIT UND MEHREREN SLAVE-EINHEITEN ZUM BETRIEB MEHRERER EINRICHTUNGEN
SYSTÈME COMPRENANT UNE UNITÉ MAITRE ET UNE PLURALITÉ D'UNITÉS ESCLAVES POUR ACTIONNER UNE PLURALITÉ DE DISPOSITIFS

(30) Priority: 04.07.2005 WO PCT/DK2005/000464
(43) Date of publication of application: 16.04.2008
(73) Proprietor: VKR Holding A/S, 2970 Hørsholm (DK)
(72) Inventor: BYBERG, Henrik Raun, DK-3450 Allerød (DK); EBBE, Ulrik Vagn, DK-2670 Greve (DK); LINDBY, Steen, DK-3400 Hillerød (DK); KJÆRSGAARD, Preben, DK-7430 Ikast (DK)
(74) Representative: Patentgruppen A/S
(86) International application number: PCT/DK2006/000388
(87) International publication number: WO 2007/003194

(56) References cited:
- WO-A-00/08548
- WO-A-02/054225
- US-A1- 2003 234 737
- US-B1- 6 563 430

## Description

### Field of the invention

The invention relates to a system comprising at least one master unit and a plurality of slave units, said master unit and said slave units comprising means for performing preferably two-ways communication via radio frequency channels, wherein said at least one master unit comprises means for transmitting control signals to said slave units, said slave units each being provided with a unique address and each being associated with a controllable device.

### Background of the invention

In control systems of the above-mentioned type it may be time-consuming and relatively complicated to operate a plurality of devices.

In the prior art, systems have been described by means of which an enhanced user-friendliness has been aimed at and achieved. An example of such a system is described in EP 1 340 198 B1, wherein a number of units may be associated with a remote control during an initial configuration procedure. After this, a group configuration may be performed, where the units may be selected one by one and assigned to a certain group. Thus, a number of groups may be defined, involving a number of devices that may be operated simultaneously. However, the user may still have to operate the remote control a number of times in order to achieve a desired setting of different devices. Thus, users normally tend to refrain from exploiting the full potential as regards daily comfort etc. that may be achieved by means of the remotely controlled devices that are available to the user, since it may be annoying to have to operate the remote control a relatively large number of times.

US 6,563,430 B1 discloses a remote control device with a location dependent interface, which user control interface is customized to the context, within which the device is being operated. The remote control device comprises a location sensor, means for communicating with a remote information source and means for communicating with remotely controlled appliances. In dependence on the location sensor, the remote information source and possibly a local information source is queried for control information relating to the specific location.

WO 02/054225 A1 discloses a remote control for sending signals to electronic devices. The remote control may include a dedicated button that when activated may send signals to a plurality of electronic devices to perform one or more operations.

US 2003/0234737 A1 discloses a personal programmable universal remote control for operating electronic devices. The remote control comprises an interface module receptive of manual input and an organization module for organizing command sets into groups. The groups are operable to define a command sequence involving one or more devices.

WO 00/08548 A1 discloses a graphical user interface GUI for a remote control device for remote control of electronic equipment. The GUI assists the user when programming a macro by enabling the user to view the sequence of control options as a scrollable list of steps and facilitating an editing of the steps.

Thus, it is an objective of the invention to provide such a system which has an enhanced user-friendly, and by means of which it will be easy to perform operations involving a plurality of devices.

It is also an objective of the invention to provide such a system that facilitates the time-saving features presented by e.g. a home automation system in a manner, whereby the user may take advantage of these in a relatively uncomplicated manner.

Thus, it is generally the objective of the invention to enhance the everyday comfort of the user, e.g. by motivating the user to take advantage of the available controllable devices in a home automation system in a manner adapted to the needs of the user. These and other objectives are achieved by the invention as explained in further detail in the following.

### Summary of the invention

The invention is defined by independent claims, embodiments are defined by dependent claims. The invention relates to a system according to claim 1 comprising at least one master unit and a plurality of slave units, said master unit and said slave units comprising means for performing communication via radio frequency channels, wherein said at least one master unit comprises means for transmitting control signals to said slave units, said slave units each being provided with a unique address and each being associated with a controllable device, and wherein said at least one master unit comprises means for executing a sequential transmission of control signals to at least one of said slave units, and wherein
- said at least one master unit is adapted for executing said sequential transmission of control signals to at least one of said slave units in response to an initiation indication, that
- said master unit comprises timing means for facilitating delayed execution of said transmission of control signals, and that
- said master unit comprises timing means for facilitating an execution of said transmission of control on a real time base scale, wherein
   said system is adapted for assigning said execution of a sequential transmission of control signals to one of at least two predetermined types of application programmes,
- wherein said at least two types of application programmes comprise a first type (SF) application programme for executing said sequential transmission of control signals on routine basis in relation to a real time scale and
- wherein said at least two types of application programmes comprise a second type (LS) application programme for executing said sequential transmission of control signals in relation to an initiation indication.

Hereby it is achieved that sequential operation of one or more of the devices associated with the slave unit may be performed for example by a simple initiation command, e.g. a sequential operation that has been programmed in advance by the user. Furthermore, this may be accomplished in a manner allowing the slave units to be designed in a relatively uncomplicated manner, i.e. since the master unit will comprise all information related to the operation, thereby only requiring the slave units to be able to perform one operation at a time. Also, the system may be flexible since e.g. new units may be added to the system without interfering with already programmed operations.

As the at least one master unit is adapted for executing said sequential transmission of control signals to at least one of said slave units in response to an initiation indication, the execution may be initiated by e.g. a manual activation such as for example a key pad manipulation, input from sensor means comprised in the system, a timer input etc.

According to the invention, the system is adapted for assigning said execution of a sequential transmission of control signals to one of at least two predetermined types of application programmes. Hereby, it is achieved that an enhanced functionality may be facilitated and that the system may perform in an optimal manner while providing the user with a wide scope of applications, user-defined as well as predefined.

As the master unit comprises timing means for facilitating delayed execution of said transmission of control signals, it is achieved that a time-dependent execution of operations may be performed, e.g. the sequential transmission of control signals may comprise a control signal transmitted to e.g. a window operator 30 minutes after activation of the function control key in order to achieve that the window is opened for example 25 %, and after yet e.g. 10 minutes a subsequent control signal is transmitted ordering the window operator to close the window fully.

According to the invention, the master unit comprises timing means for facilitating an execution of said transmission of control on a real time base scale, whereby it is achieved that a time-dependent execution of operations may be performed for example as a day to day-routine, e.g. the sequential transmission of control signals may comprise a control signal transmitted to e.g. a window operator at the same time each day.

According to the invention, said at least two types comprises a first type (SF) application programme being adapted for executing said sequential transmission of control signals in relation to a real time scale and a second type (LS) being adapted for executing said sequential transmission of control signals in relation to an initiation indication.

Hereby, such a first type that will also be referred to as a Smart Function (SF) application programme in the following, may be established as an application programme that may be executed in the background, e.g. without input requirements on the part of the user, and in such a manner that manually activated control of a slave unit, e.g. the opening and closing of a window may be performed without interfering with the execution of the Smart Function.

Further, such a second type that will also be referred to as a Lifestyle Scenario (LS) application programme in the following, may be established as an application programme that may be executed in dependence on e.g. a particular occurrence such as e.g. a keypad manipulation, an input from sensor means, etc. and such an application programme may be confined to a limited period, e.g. for example being limited to actions taking place in a period of 24 hours.

According to an embodiment, said master unit may comprise storage means for information related to said sequential transmissions comprising information related to addresses for specified slave units, control information or time information.

According to an embodiment, said initiation indication may be e.g. a manual activation, input from sensor means, a timer input etc.

Advantageously, said second type application programme (LS) may relate to a complete system table, e.g. for performing as a global subtype (GLS) application programme.

Hereby, such a global subtype (GLS) application programme may involve all nodes, e.g. slave units, sensors etc. in a system, e.g. the whole house. For example, when the user leaves the house with his/her family for summer holidays, the user may activate the 'Vacation' Lifestyle Scenario that may perform the tasks that all windows and rolling shutters are being closed, the heating is put in an economy level throughout the house, all lights are turned off, the garage door and the door lock are closed and the sun screenings are retracted or rolled-out, depending on the type of sun screening and the preferences of the user.

Further, said second type application programme (LS) may relate to part of a complete system table, e.g. for performing as a local subtype (LLS) relating to e.g. a zone, a sector or a room of the system.

Hereby, such a local subtype (LLS) application programme, e.g. a local Lifestyle Scenario may be defined and configured for involving only e.g. part of the house. For example, when the user presses the 'Wake up' button in his/her room, the following tasks may be performed:
- the sun screening in the bedroom is raised slightly and the lights are turned on to create a soft light.
- in the bathroom the lights are turned on.
- after a while the sun screening is raised and the bedroom is ventilated while the user is in the shower.
There is no action in the kids bedroom because they are still sleeping, nor in the living room.

Advantageously, said system may be configured in such a manner that parameters for a first type application programme (SF) being executed are influenced by a second type application programme (LS) being executed concurrently.

Hereby a number of advantages may be achieved, that may provide a functionality that is logical and user-friendly. For example, all day the global second type application programme LS "Arrive" (equals the house being in normal mode) has been running allowing all enabled first type application programmes SF to be executed on all relevant slave units, e.g. actuators throughout the house. When the child is put to sleep the local Lifestyle Scenario (LLS) "Good night" in his/her room is activated where after the local slave units are adjusted according to the Lifestyle Scenario (LS) settings. Now also the Smart Functions (SF's) automatic functionality is blocked to ensure the peace and good sleep of the child, e.g. no disturbances. The re-allowance of Smart Functions (SF's) in the children room is not accepted until the Lifestyle Scenario (LS) period has elapsed, for example the next morning.

Preferably, said first type application programme (SF) may be activated or deactivated by at least one of a manual activation, a sensor input including a timer input, an input from a master control executing a sequential transmission of control signals of said second type application programme (LS).

Advantageously, said second type application programme (LS) may be activated by an input from a master control executing a sequential transmission of control signals of said second type application programme (LS).

Preferably, said system may be configured for executing only one global subtype application programme (GLS) at any time.

Hereby, it may be assured that the system will perform in logic manner and confusing collisions between different application programmes will be prevented. Only one global Lifestyle Scenario can run in the house at one instant. The system may preferably be configured for having the last activated global Lifestyle Scenario GLS override the previous one.

Furthermore, activating a global Lifestyle Scenario GLS will override all local Lifestyle Scenarios LLS running at that instant and, as described above, affect Smart Functions SF on all slave units (for example actuators) within the house defined in the Smart Functions (SFs).

Global Lifestyle Scenarios GLS may according to this embodiment always be running until the next global Lifestyle Scenario GLS is activated, i.e. meaning that no time period restrictions are involved.

According to a preferable embodiment, said system may be adapted for establishing a prioritizing of said application programmes being executed, e.g. said first and second types and/or said subtypes.

Hereby, it is achieved that the different types of application programmes may be executed in a relatively simple manner, e.g. by assigning different priority rules or levels in relation to the different types and/or subtypes, by establishing specific rules, for example specifying that the latest received control signal received at a slave unit will be executed and that a previous control signal will be disregarded, etc.

According to a further preferable embodiment, said plurality of slave units may be adapted for establishing a table for handling of priorities relating to received input signals such as control signals or sensor signals, said table facilitating a prioritizing of said application programmes of predetermined different types, e.g. first type (SF) application programme and second type (LS) application programme, in said system.

Hereby, it is achieved that the different types of application programmes may be executed in a relatively simple manner, e.g. by assigning different priority levels to the different control signals relating to different types, e.g. SF's, LS's, GLS's, LLS's, thereby facilitating the necessary and/or predefined prioritizing between these different programmes.

This may be relevant when two or more Smart Functions are running in the system and/or when one or more local Lifestyle Scenarios are running, which also may take place at the same time as a global Lifestyle Scenario is being executed, in which case one and the same slave unit may receive commands, also different commands, from different application programmes. In such cases the priorities are handled in the system as such, e.g. by means of the priorities related to the signals received at the individual slave units and by means of the handling tables comprised in e.g. each of the slave units.

Advantageously, said slave units may be configured for transmitting an acknowledgement signal to said master unit in response to the reception of a control signal.

Hereby, it is achieved that in case a slave unit has not successfully received a control signal in the course of the execution of sequential operations, an indication hereof may be displayed on the master unit and/or the master unit may perform the step of retransmitting the specific control signal, possibly after a delay period in order to establish the desired operation.

In a further preferable embodiment, said master unit may be configured for transmitting a status request signal to said slave units that have received a control signal, and said master unit may be configured for transmitting said status request signal after a time delay corresponding to the time taken by the slave unit to perform an operation in response to the received control signal.

Hereby, it is achieved that the master unit will be informed of, whether the desired operation has been performed with success and further, this is taking place in a manner, whereby the communication is reduced to a necessary minimum, thereby also allowing a power consuming operation for the master unit, e.g. in order to save battery power. For example, if a command signal has been transmitted to a window operator ordering a fully closing from a fully open position, the slave unit can calculate the time that is required for the window operator to perform this operation and transmit this value to the master unit, for example when an acknowledgement signal is transmitted from the slave to the master. At the calculated time, possibly extended with a marginal additional interval, the master unit transmits a status request signal to the specific slave unit and the slave unit responds to this, e.g. by signalling that the window is now fully closed. If the status report from the slave unit indicates that the window operator is still working, the master unit may transmit a subsequent status request signal after a further period.

Advantageously, said slave units may be addressable by said master unit in a number of sectors, wherein said master unit further has means for allocating predefined identifications to said slave units, and wherein said master unit has display means, by means of which said predefined identifications may be displayed.

Said sectors may be for example groups that comprise a number of similar or dissimilar units, rooms that comprise a number of similar or dissimilar units that are related to e.g. a room in a house, or zones, that comprise a number of similar or dissimilar units that are related to more than one room in e.g. a house.

Preferably, said master unit may be provided with at least one predefined sequential execution of control signals, said predefined sequence being executable upon manipulation of said function control key.

Hereby, it is achieved that certain standard operation programmes may be readily available to the user, for example a ventilation programme that may serve e.g. to open all windows in for example a room, a group or a zone, when the function control key is manipulated and close all windows again after a predetermined period, possibly combined with other operations, such as for example the closing or neutralization of heating means, e.g. by - prior to the opening of the windows - setting a thermostat on stand-by for a period.

Advantageously, said master unit may be configured for facilitating modifications of said at least one predefined sequential execution of control signals.

Hereby, it is achieved that the user may alter said standard programmes - or programs made in advance by the user - in view of the specific needs of the user.

According to a further preferable embodiment, said master unit may be configured for receiving and storing one or more application programmes comprising predefined sequential execution of control signals.

Hereby, it is achieved that the user may be provided with such application programmes, e.g. in view of needs of the user and/or the equipment that is available at the e.g. home of the user. For example, if the user has acquired new pieces of equipment in addition to equipment already installed, it may be desirable to achieve one or more new programmes that are specifically designed for such equipment or combination of units. If for example a user has a number of window operators and now acquires a number of blinds for said window, a programme designed for e.g. a sun protection day-programme may be a desirable option. Such a standard programme may be provided on some form of storage means, may be transferred to the master unit by means of e.g. a computer/PC and/or may be provided via internet facilities. Further, hereby the user may take advantage of new programmes that are developed and delivered by provider(s). Such programmes or amendments to already stored programmes may be transferred to the master unit by means of e.g. a cable connection from e.g. a PC or the transmission may take place wirelessly, e.g. by RF-means.

According to a still further preferable embodiment, said master unit may be configured for comprising one or more application programmes comprising predefined sequential execution of control signals, wherein said master unit is configured for activating one or more of said programmes in dependence on properties of the system and in dependence of an approval.

Hereby it is achieved that the master unit may have stored a number of programs that may be inactive, e.g. the programs are stored in a memory, but are not executable. When the master unit detects that the system has achieved a property, e.g. a status, combination of equipment or a special kind of equipment that makes one of the stored programmes of possible value to the user, the master unit may "suggest" to the user that the program is made active, e.g. executable. The user may reject the program or may approve that the program is made active, in which case the program is "loaded" and the user may use the program readily or may for example adapt the program to the individual requirements

For example, a user who has a number of controllable windows but no other controllable devices will have no advantage of a program that may perform an automatic control of e.g. Venetian blinds. Thus, if the program was loaded in an operable form in the master unit, it would only serve to puzzle and possibly confuse the user. However, as soon as the user has acquired e.g. Venetian blinds to the windows, the master unit will detect this, when the system is updated, and the master unit will suggest to the user that the program may be advantageous. If the user approves, the program is made executable.

In accordance with further aspects of the invention, said initiation indication may comprise an activation of a function control key, a timer signal or a control signal received from a controller or a sensor.

Hereby, it is achieved that the execution of one of the programmes may be initiated in various manners. In its simplest form, the initiation takes place by e.g. pushing a function control key or program key corresponding to the desired program. Otherwise, the program may be initiated by a timer signal, e.g. at a specific time of day, week and/or year or after a preset time from the occurrence of an event. Furthermore, the program may be initiated by a signal that is received by the master unit from e.g. a sensor or controller. For example, if a ventilation programme has been stored, whereby first a number of windows are opened, the heating means are adjusted and after a further period of time the windows are closed again, this programme may be initiated by a signal from a temperature sensor indicating a high temperature, which signal is received by the master unit, where after the program is initiated.

Preferably, said master unit may comprise means for recording and storing a number of sequences corresponding to sequential transmission of control signals, said means comprising the use of at least one function control key.

Hereby it is achieved that said programs may be assigned to a specific key, e.g. by storing the recorded operations using the specific key, of which the master unit may comprise one or more, e.g. two, three, four etc.

In a further preferable embodiment, said master unit may be configured for executing a sequence corresponding to sequential transmission of control signals by manipulating said at least one function control key and wherein said master unit may be configured for executing a specific sequence in dependence on the manner, in which said function control key is manipulated, e.g. the number of times the key is pushed.

Hereby it is achieved that said programs may be assigned to a specific key and be activated by means of said key, preferably by manipulating the key a number of times that may correspond to e.g. a number assigned to the program. If for example four programs have been recorded and stored by means of such a program key, they may be numbered program 1, program 2 etc. Thus, the activation of a specific program may be performed by pushing the program key the corresponding number of times, e.g. activating program 3 by pushing three times. It will be understood that for practical reasons the key has to be manipulated within a predetermined time or with a maximum time limit between pushes in order to register that consecutive pushes indicate a specific program number.

In a still further preferable embodiment, said master unit may be configured for executing a sequence corresponding to sequential transmission of control signals by manipulating said at least one function control key and wherein said master unit is configured for executing a specific sequence in dependence on manipulation of said function control key, and wherein the stored sequences are activated cyclically.

Hereby, it is achieved that a number of programs may be executed in a predefined sequence, for example the programs 1 to 4 stored on e.g. the function control key PI. As explained above, the programs may be executed by pushing the key the corresponding number of times and in accordance with this embodiment a first push on the key will initiate program 1. At a later time, when the key is pushed again, program 2 will be initiated etc. It will thus also be understood that if the key at some time is pushed quickly two times, the master unit will skip the first program in line and go to the next that will be executed etc. Hereby, it is achieved that the user will not need to remember which program, e.g. what number of key manipulations, corresponds to a certain program of a range of programs that the user takes advantage of in e.g. a daily routine. This may for example comprise a program that the user initiates when he/she wakes up, a second program that is used when he/she leaves the house, a third program that is usually initiated when the user comes home from work and a fourth program that is used before the user goes to bed. These programs may thus simply be executed by pushing the program key e.g. PI only one time, and the user then just have to remember to initiate a program at the respective points in the daily routine. If he/she forgets to activate a program, it is a simple matter to regain correspondence with the daily routine by pushing the program key twice the next time, the user activates the program key.

Preferably, said master unit may be configured for assigning a label, e.g. a number or name to a stored sequence corresponding to sequential transmission of control signals, and wherein a renaming is facilitated.

Hereby, an enhanced user-friendliness is achieved, since the user may be directly informed by e.g. a suitable label or name presented on the display when a program is selected. For example, with the above-mentioned four daily routine programs, the user may choose to rename the first one to "Good morning", the second one to "Leaving", the third one "Home again" and the last one "Goodnight". Thus, the relevant programs will be more or less self-explanatory to the user, whereby the user further may be motivated to create more programs that may be helpful to the user in everyday routines, for example a program "TV" for adjusting blinds, light, curtains etc. when the user wants to watch TV etc.

Advantageously, said master unit may be configured for facilitating the deletion of a stored sequence corresponding to sequential transmission of control signals, whereby the label or name may be deleted without influencing on other labels or names.

Hereby, it is achieved that a program may be deleted without creating a potential confusing condition. If for example the user is accustomed to using five programs and e.g. accustomed to pushing the key four times to activate a certain program, it would lead to mistakes if, when for example program 3 is deleted, the remaining numbers were renumbered. When the number "four" is maintained for the particular program, e.g. leaving the place number three empty, the user may still immediately find and activate the desired program that will still be activated by pushing four times.

In a further advantageous embodiment, said master unit may be configured for facilitating an editing of a stored sequence corresponding to sequential transmission of control signals.

Hereby, it is achieved that the user may easily modify the programs that are already stored, for example in view of the user's experiences with the system or when new equipment is installed etc. instead of having to create new programs from scratch. Thus, thereby the complexity in maintaining and operating the system is reduced, also leading to an enhanced user-friendliness.

Furthermore, said system may comprise at least one further master unit in the form of an application programme activator such as for example an activator for a second type application programme (LS), e.g. a Lifestyle Scenario Activator (LSA). Hereby, it is achieved that a remote control comprising a limited functionality may be provided, for example a simple one-button key ring controller or the like for activating for example a single or only few Lifestyle Scenarios. Such an activator will not comprise the complexity and finesse of a regular master unit and may be used for operating e.g. garage doors, for use by children etc. and/or in applications where it is desirous to use a relatively simple remote control.

In particular, such a Lifestyle Scenario Activator (LSA) may be adapted for transmitting a signal to a master unit, e.g. a Lifestyle Scenario controller, that may be placed inside the house, and which upon receipt of such a signal from a LSA initiates a Lifestyle Scenario involving for example the opening of the entrance door, the operating of lights, the opening of windows, etc., e.g. functions which are normally performed when the user enters the house. Thus, the LSA may be defined as performing the function of an e.g. programme key on a master unit. Thus, the user need not carry a regular master unit, e.g. a remote control master unit, when leaving home, but need only carry the relatively small and handy LSA. When the user has entered the house, the regular master unit will then be at hand for performing other operations, that the user may wish to have performed. The LSA may find use in other applications, for example as a handy remote control.

The system may be used for a home automation system.

Further, the invention relates to use of system according to one or more of claims 1 - 26 for control of operable devices such as windows, doors, screening devices or lights in buildings.

According to an embodiment, the use of the system may be for performing automatic operation of the operable devices, e.g. in a home automation system.

According to an embodiment, the use of the system may be for performing automatic sequential operation of the operable devices, e.g. in a home automation system. According to an embodiment, the use of the system may be for performing automatic sequential and mutual prioritized operation of the operable devices, e.g. in a home automation system.

According to an embodiment, the use of the system may be for performing automatic operation of the operable devices, e.g. in a home automation system, in a manner allowing repetitive sequential operations as well as sequential operations requiring an initiation command each time it is wished to perform such an operation.

### The figures

The invention will be explained in further detail below with reference to the figures of which
- fig. 1: shows in a schematic manner a control system comprising a number of controllable devices in a house or a building,
- fig. 1a: shows in an enlarged view an illustration of controllable devices that may be associated with a window,
- fig. 2: shows an embodiment of a remote control or master unit in accordance with the invention,
- fig. 3: illustrates the establishing of rooms in the control system,
- fig. 4: illustrates a division or grouping of controllable devices into sectors according to a further embodiment of the invention,
- figs. 5 - 7: illustrate the recording of programs and the use of the program keys,
- figs. 8a, 8b: illustrates different programmes using timing means,
- fig. 9a: illustrates in a schematic manner a system according to an embodiment of the invention comprising Smart Function and Lifestyle Scenario controllers, and
- fig. 9b: shows in a corresponding manner a system comprising Lifestyle Scenario activators.

### Detailed description

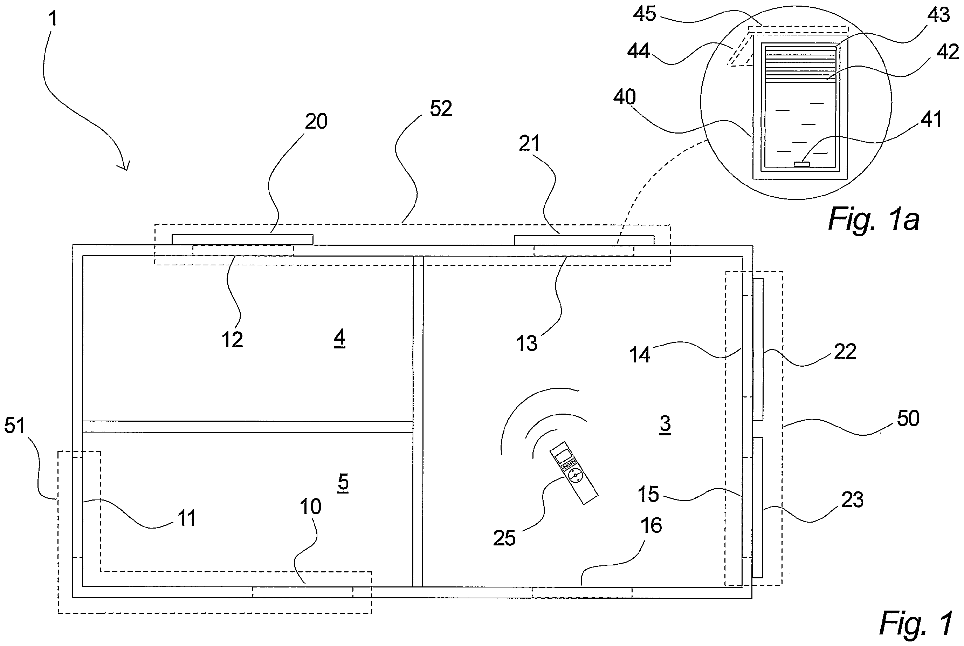

An example of a control system according to an embodiment of the invention, e.g. a home automation system or part thereof, is illustrated in fig. 1. Here, a building, a house, an apartment or the like 1 is illustrated in a schematic manner, wherein a number of devices, e.g. equipment and fittings, which are controlled by a system in accordance with the invention, are furthermore illustrated in a general manner.

The house or apartment 1 may comprise a number of rooms, for example the rooms 3, 4 and 5, and in these rooms a number of windows 10, 11, 12, 13, 14, 15 and 16 may be located. Further, some of these windows may be provided with awnings 20, 21, 22 and 23 as also illustrated. It will be understood that these pieces of equipment are only examples of devices that may be controlled by means of the system, e.g. by means of one or more remote controls 25. Such remote controls are also referred to as master units in the following.

Thus, it will be understood that a window 40 may as shown in fig. 1a comprise e.g. a window actuator, operator or opener 41, a Venetian blind 42 that may be operated by drive means 43 and an awning 44 placed outside the window and operated by drive means 45.

Other examples of devices and equipment that may be controlled by such a system are motorized shutters, blinds and curtains, garage doors, roof windows, heating and cooling systems, alarms, lighting equipment, locks etc.

The devices, equipment etc. that are controlled by means of the system, are associated with slave units, e.g. means for receiving control signals from the remote control(s) 25 and for operating in accordance with received signals. Such means may comprise radio frequency receiving and transmitting means, although it will be understood that some devices may be connected by e.g. a wire bus that may serve to transmit signals from a common RF receiver to the respective slave units associated with the respective devices etc.

Furthermore, other devices than slave units, e.g. actuators etc. that may be controlled by the system, e.g. by means of a master unit, a remote control, etc. may be comprised in the system. For example, sensors for providing inputs for the system, for example sensors for measuring temperature, light, C0₂-content etc. may be included. Such sensors may be associated with particular devices such as for example a particular window, or may be assigned in general to the system or part of the system.

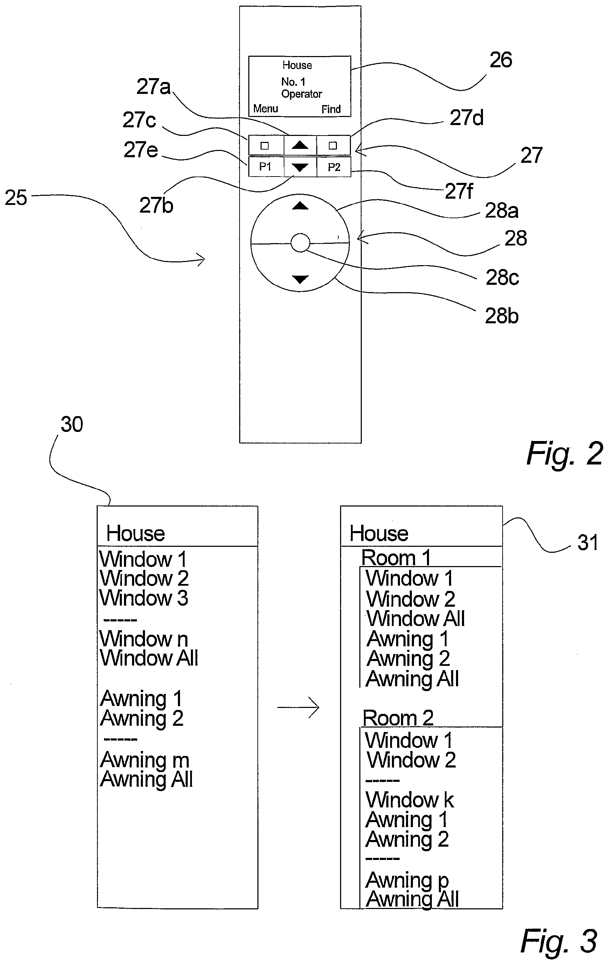

An example of a remote control or master unit 25 is shown in further detail in fig. 2. This remote control comprises RF receiving and transmitting means, a power source such as a battery, storing means, control means etc., and further as shown in fig. 2, the remote control comprises operating means in the form of a display 26, an operating keypad 27 for e.g. displaying information on the display 26, for selecting options, devices etc. and control keys 28 for e.g. operating a selected device.

When a system according to the invention has been installed, an initial set-up or configuration must be performed whereby e.g. an automatic registration of the devices is performed. This may be initiated by means of the remote control 25, e.g. by means of the operating means. Such an automatic registration may involve the transmittal of a unique code from the remote control to all remote-controlled devices, e.g. slave units that are in proximity of the remote control 25 communication-wise. In accordance with a predefined procedure, for example as described in EP 1 340 198 B1, the slave units will during this procedure transmit a response signal to the remote control 25, containing information in the form of an address and the type of the slave unit, e.g. a window operator, an awning, blinds etc.

The exchange of addresses and of the code may take place by the exchange of an address and of the code being completed between one slave unit and the master unit/remote control 25 before carrying out the exchange between the following slave units and the remote control and this initiation process may continue sequentially until the last of the slave units has transmitted its address and type and has received the code. The sequence of configuration of the respective units may be determined in various ways and may e.g. be determined by the units being susceptible to the initiation signal at different time intervals which may be mutually independent and potentially randomly divided between the units. The unit with which the susceptible time interval and an initiation signal first coincide will thus be configured first etc.

Obviously, such an initial configuration procedure may be performed in other manners.

When the auto configuration has been completed, the system is ready for operation. The remote control 25 has now stored a list of devices including the address for each and the type, e.g. window operator, blind, awning light etc.

Furthermore, the master unit is configured for arranging the slave units or devices, which have now been associated with the master unit, in such a manner that the slave units are shown in a list on the display 26 assembled in accordance with the type of equipment and with a numbering, e.g. showing first window operator no. 1-7, blind no. 1-5, awning no. 1-4 etc. The user may for example scroll up and down this list, e.g. using the navigation keys 27a and 27b, until a device is found and selected, in which case the device may be operated by means of the keys 28a, 28b and 28c.

In order to make the operation of the system easy and logic, the master unit 25 facilitates a division or grouping into sectors, e.g. groups of the available controllable units, which will be further explained in the following.

As long as the available controllable units are arranged as described above the display means 26 of the master unit will involve only two levels, i.e. "House", which, when selected, will be replaced by the list of all units, or, if a "Find" command is used, the desired type can be found before going into the number-level. This is illustrated in fig. 3, where the box 30 represents this arrangement of the available units. Here, it is also shown that when more than two units of the same type is present, the master unit has automatically created a "All"-group, for example "All window operators".

First, a room may be defined, for example the room 3 in fig. 1.

This may be done by selecting a "Menu", and here select a menu-item, where a sector such as e.g. a room can be created. Here, the individual units may be selected and allocated to the room, i.e. by pressing the key 27c to enter the unit in the "room". It is noted that when a device or unit is selected, it is possible to observe which unit has been selected by pressing the control keys 28 for a brief period of time. Further units can be selected and added to the "room" as described, until the "room" is finally stored as e.g. "Room 1". This is illustrated in fig. 3 with the box 31.

When a room has been created, the master unit will offer to save all remaining units in a room, e.g. "Room 2" as show in fig. 3, or, if this is refused, the display will return to the list from which remaining products/units can be selected for a new room, etc. It is noted that when units have been selected for a room and the room is stored, the units are automatically renumbered as also indicated in fig. 3.

As explained, a "Room" may comprise the controllable units in a specific room, for example the room 3 in fig. 1. Here, the window operators 13 - 16 are selected, the awnings 21 - 23 and, if other types of equipment are provided, for example blinds, roller shutters, light etc, these may be included as well. When the room has been established, which as explained above means that at least one more "room" is created, the master unit may now involve one more level. When "House" is selected, it will according to his embodiment be possible to choose between e.g. "Room 1" and "Room 2" as illustrated with the box 31 in fig. 3. Here after, it will be possible to select all units of a certain type or it will be possible to scroll between the units in the room.

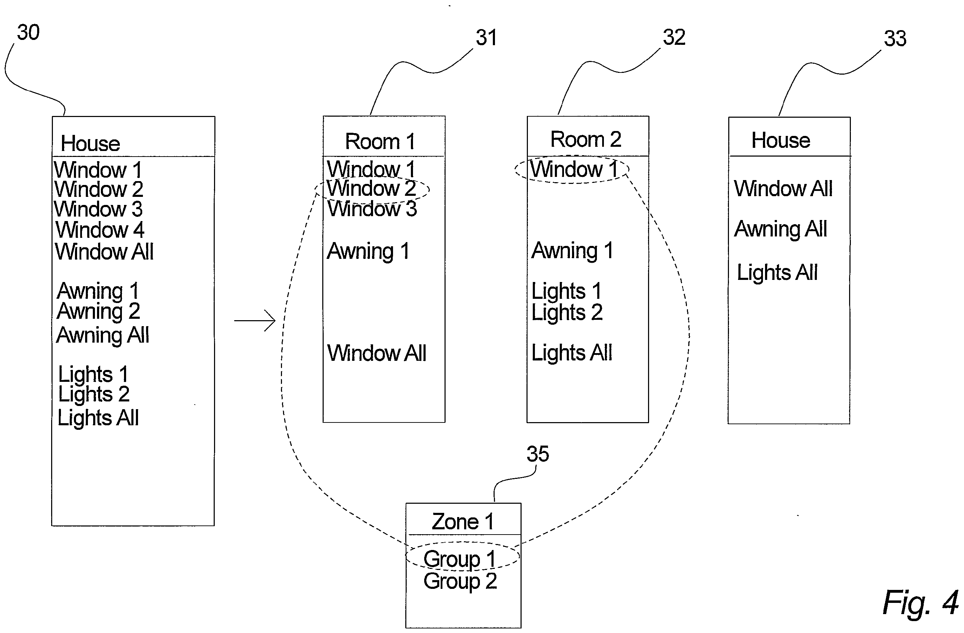

Another manner of arranging the division or grouping of controllable devices into sectors is illustrated in fig. 4.

After the initial auto-configuration a listing as shown at 30 will be available to the user, comprising four windows, three awnings, two lights and further three "all"-groups.

The user now creates a room, "room 1", as shown at 31 comprising three windows and one awning. As mentioned above, an "all" group is also automatically created when the room is stored. Further, the remaining devices are assigned to a "room" as shown at 32. Now, when the user wants to operate the devises, the user may select "room", in which case he/she will be able to select one of the two rooms and subsequently the devices and group(s) comprised in the room.

Furthermore, it will be possible for the user instead to choose the "house" as indicated at 33, in which case the user will be presented with the option of selecting a particular type of device and a specific one of these devices etc.

However, the creation of a sector in the form of a zone is also illustrated in fig. 4. A zone may be defined as a group that is created across the already defined rooms.

If for example the user selects e.g. "window 2" from "room 1" and "window 1" from "room 2" and wishes to create a group consisting of these, a zone 35 will be created, e.g. "zone 1", which comprises a group, "group 1" consisting of the two windows.

As mentioned above, such a zone may be renamed, for example into "south zone", whereby the windows in "group 1" will be identified as the windows placed in this zone.

As shown in fig. 1 and as described in connection with fig. 4, it may further be possible to create a group consisting of a number of units of similar or dissimilar types in a specific room, for example a group 50 consisting of the awnings 22 and 23 in the room 3 or a group 51 consisting of the window operators for the windows 10 and 11 in the room 5.

As further shown in fig. 1, it is possible to create a special grouping which will be referred to as a "zone" for the purposes of this application. Such a zone comprises units of the same type or different types, but located in different "rooms". This is illustrated in fig. 1 with the zone 52 consisting for example of the awning 20 located in the room 4 and the awning 21 in the room 3. When such a zone has been created, it is made possible to operate these devices simultaneously, for example the awnings located at the south-facing wall. It should be mentioned that zones may not only cover different rooms in the same level, but also rooms at different levels, for example in a house having a ground floor and a first floor, e.g. an attic.

The master unit 25 also comprises features enabling the user to rename the defined sectors, e.g. groups, rooms, zones etc. into names that may be user-defined and enables the user to readily realize what the selected sector comprises, e.g. by using for example "kitchen", "bedroom", "south facade" instead of numbers for identifying the specific sectors.

Further, the master unit 25 facilitates that the user may specify the ratio of actuation, e.g. for opening a window or group of windows 40%, which for example may be done by selecting the specific item on the display 26, activating the key 28a continuously until a 40% ratio is displayed on the display and then releasing the key, where after the actuation takes place.

Furthermore, the master unit comprises timer means for facilitating delayed or time-specified actuation, which may be performed in a number of ways. A timer set-function may be selected and a specific item, e.g. a window or a group of windows may be selected, where after an operation may be defined, for example a 100% opening. Further, a subsequent operation may then be chosen, for example closing to a 10%. position. A timer may be selected for the closing operation and set by means of the keyboard 27, 28 and the display 26.

The master unit 25 also facilitates the establishing of programmed operations of the items available for actuation, e.g. individual devices, groups, rooms, groups in zones and rooms etc., which may take place also incorporating actuation to a certain position and including the use of the timer means, for example with delayed actuation, actuation at a predefined time - real-time actuation, etc.

This is done for example by selecting a "record program" menu-item, performing the respective keypad-operations in order to achieve the desired actuations for the selected devices and/or sectors of devices, and storing the program by e.g. pressing one of the program-keys 27e or 27f (PI or P2), of which more than two may be available.

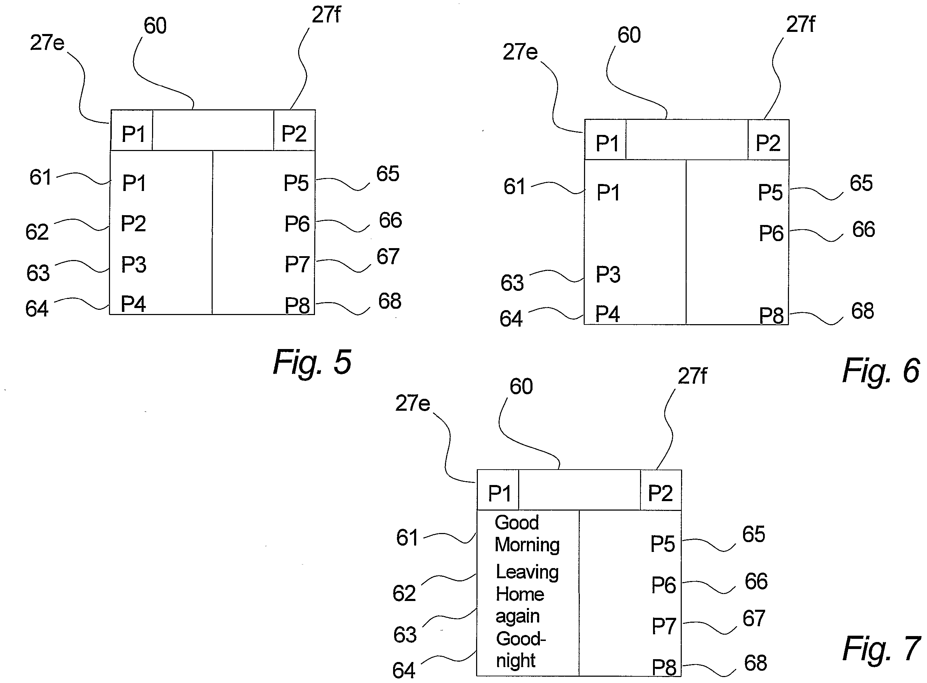

Further, these program-keys 27e and 27f may each be related to more than one program, for example four, five, six etc., depending on the master unit in question. For example, as illustrated with the box 60 in fig. 5, four programs may be allocated to each program key 27e and 27f. These programs 61 to 68 may be stored as they are programmed, e.g. the first program stored using the key 27e is stored as the program P1, the next one is stored as P2 etc. The first program stored using the key 27f is stored as P5 etc.

When executing these program, the program key in question is manipulated, e.g. pushed a number of times corresponding to the number, e.g. in order to execute program P3, the key 27e is pushed three times, in order to execute the program P6, the key 27f is pushed two times etc. It is noted that in order to achieve this functionality, the key must be pressed relatively quickly, for example with a maximum time between pushes of 2 seconds.

In accordance with the invention it is possible to edit the stored programs, e.g. by selecting the relevant program from a list showing the programs and selecting an edit- function.

Further it is possible to delete the one or more of programs, in which case it is arranged that the remaining programs maintain their names. This is illustrated in fig. 6 that corresponds to fig. 5, but with the programs 62 and 67 deleted. As shown, the deletions leave empty places, which has the advantage that the user, which now has the habit of pushing the key 27e three times in order to activate the program P3, still has to do this to activate the program, even though this program cannot be said to be the third program under the key 27e. Similarly regards the key 27f, where the user still has to push the key four times in order to execute the program P8.

Another manner of operating the program-features of the master unit allows the user to execute the programs cyclically. By pushing the key 27e once, the program 61 is executed. The next time the key is pushed, the next program 62 will be executed etc., which may be useful when the programs relate to actuations that takes place as a part of the daily routine. Thus, the user will not need to remember which program, e.g. what number of key manipulations, that corresponds to a certain program of a range of programs that the user takes advantage of in e.g. a daily routine. This may for example comprise a program that the user initiates when he/she wakes up, a second program that is used when he/she leaves the house, a third program that is usually initiated when the user comes home from work and a fourth program that is used before the user goes to bed. These programs may thus simply be executed by pushing the program key e.g. PI only one time, and the user then just have to remember to initiate a program at the respective points in the daily routine. If he/she forgets to activate a program, it is a simple matter to regain correspondence with the daily routine by pushing the program key twice the next time, the user activates the program key.

As shown in fig. 7, the master unit 27 facilitates the naming of the recorded programs and the re-naming as well, which further facilitate the user-friendliness of the system. The user will then not need to remember, what for example P6 performs, but the user may assign a name to this program, that to the user indicates the purpose and function of the program. As shown in fig. 7, the programs PI to P4, that may be daily routine programs, may be named "Good Morning", "Leaving (for work)", "Home Again" and "Goodnight". Thus, if the user is in doubt whether he/she has activated the last program, it will be apparent to the user, when these labels are shown on the display.

As explained, the user may record and store programs, but further standard programs may be provided, for example programs that presumably will suit most users, possibly after minor editing. Further, such programs may be made available to the user, when he/she have acquired new devices that provides further possibilities to the user, e.g. in view of the combination of items that the user has, e.g. new programmes that are specifically designed for such equipment or combination of units.

If for example a user has a number of window operators and now acquires a number of blinds for said window, a program designed for e.g. a sun protection day-programme may be a desirable option. Such a standard programme may be provided on some form of storage means, may be transferred to the master unit by means of e.g. a computer/PC and/or may be provided via internet facilities. Further, hereby the user may take advantage of new programmes that are developed and delivered by provider(s). Such programmes or amendments to already stored programmes may be transferred to the master unit by means of e.g. a cable connection from e.g. a PC or the transmission may take place wirelessly, e.g. by RF-means.

Further, the master unit may be configured for comprising one or more application programmes comprising predefined sequential execution of control signals, and the master unit may be configured for activating one or more of said programmes in dependence on properties of the system and in dependence of an approval.

Thus, the master unit may have stored a number of programs that may be inactive, e.g. the programs are stored in a memory, but are not executable. When the master unit detects that the system has achieved a property, e.g. a status, combination of equipment or a special kind of equipment that makes one of the stored programmes of possible value to the user, the master unit may "suggest" to the user that the program is made active, e.g. executable. The user may reject the program or may approve that the program is made active, in which case the program is "loaded" and the user may use the program readily or may for example adapt the program to the individual requirements

For example, a user who has a number of controllable windows but no other controllable devices will have no advantage of a program that may perform an automatic control of e.g. Venetian blinds. Thus, if the program was loaded in an operable form in the master unit, it would only serve to puzzle and possibly confuse the user. However, as soon as the user has acquired e.g. Venetian blinds to the windows, the master unit will detect this, when the system is updated, and the master unit will suggest to the user that the program may be advantageous. If the user approves, the program is made executable.

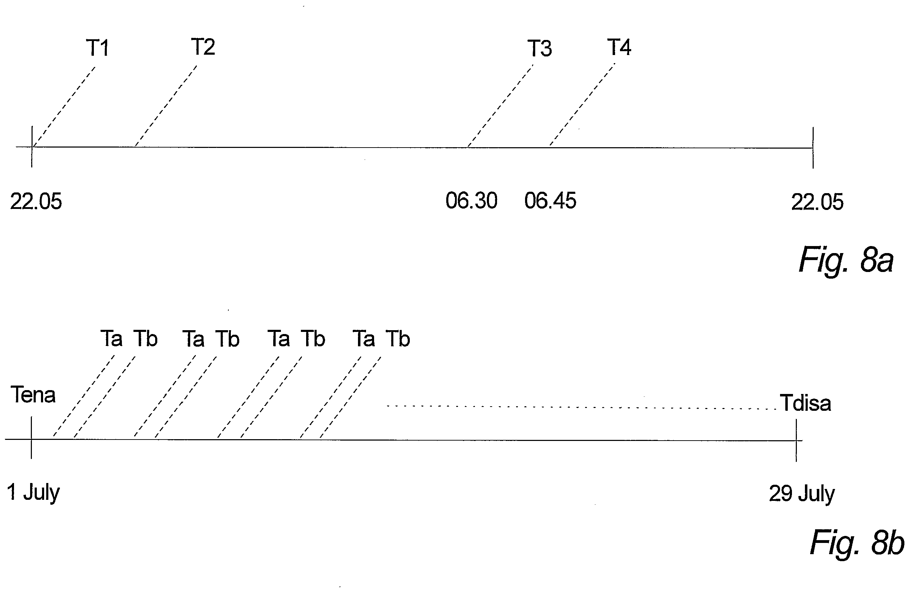

In order to further exemplify the functional options of the timer means of the system according to the invention and the master unit, e.g. timer means for facilitating delayed or time-specified actuation, reference is made to figs. 8a and 8b. Fig. 8a illustrates an application programme, which is configured as a programme for executing a number of operations in response to an activation of the programme, which is running for a limited period, in the example 24 hours, i.e. from 22.05, when the programme is activated or enabled and until 22.05 the next day, when the programme automatically is terminated. It is apparent that other periods than 24 hours may be used.

When the program is activated, it may cause the lights in the room, for example the bedroom, to be turned on at the time T1 and turned off after a lapsed period, for example 20 minutes, at the time T2. The next morning, at the time T3, for example at 6.30 AM, the programme causes the windows to be opened for ventilation and to be closed again after 15 minutes. As mentioned the programme terminates after e.g. 24 hours and must activated again the next day or later, if the user wishes to take advantage of the functionalities.

Another example is shown in fig. 8b, which shows a programme running on a real time scale. When enabled at the time Tₑₙₐ, for example on the 1 July, the programme causes for example the windows to be opened at the time Tₐ for ventilation and closed again at the time T_{b}. This operation is repeated each day at the same time as indicated in fig. 8b, until the programme is disabled at the time Tdisa.

Programmes of these two types may run simultaneously or overlapping each other. For example, the programme shown in fig. 8b may be activated at such a time that the window may have been opened at the time T3, when the programme shown in fig. 8b transmits a signal causing the window to open at the time Tₐ. Since the window already is open, nothing happens. Later, the window is caused to be closed at the time T4, caused by the programme shown in fig. 8a. Thus, when the programme shown in fig. 8b emits a control signal at the time T_{b} in order to close the window, nothing happens since the window has already been closed.

In accordance with a further embodiment of the invention, enhanced functionalities may be achieved, in particular when a system involving a number of slave units, e.g. actuators, and possibly sensors, for example sensors for providing measurement signals relating to temperature, light, etc. are concerned.

In accordance with such an embodiment, the execution of a sequential transmission of control signals that may be performed by a master unit, may be allocated to one of at least two different predetermined types of application programmes. These at least two predetermined types of programmes may be defined as a first type that will also be referred to as a Smart Function (SF) application programme for the purpose of this application, and a second type that will also be referred to as a Lifestyle Scenario (LS) application programme for the purpose of this application.

A Smart Function (SF) application programme can be established as an application programme that may be executed in the background, e.g. without input requirements on the part of the user, and in such a manner that manually activated control of a slave unit, e.g. the opening and closing of a window may be performed without interfering with the execution of the Smart Function.

The second type, i.e. the Lifestyle Scenario (LS) application programme, may be established as an application programme that may be executed in dependence on e.g. a particular occurrence such as e.g. a keypad manipulation, an input from sensor means, etc. and such an application programme may be confined to a limited period, e.g. for example being limited to actions taking place in a period of 24 hours.

Furthermore, these different types may be divided into subtypes, i.e. in dependence of the extent of the involved nodes, slave units, e.g. actuators etc. For example, when a complete system table is involved, such an application programme may be referred to as a global type, and when only part of the complete system table is involved, the application programme may be referred to as a local type

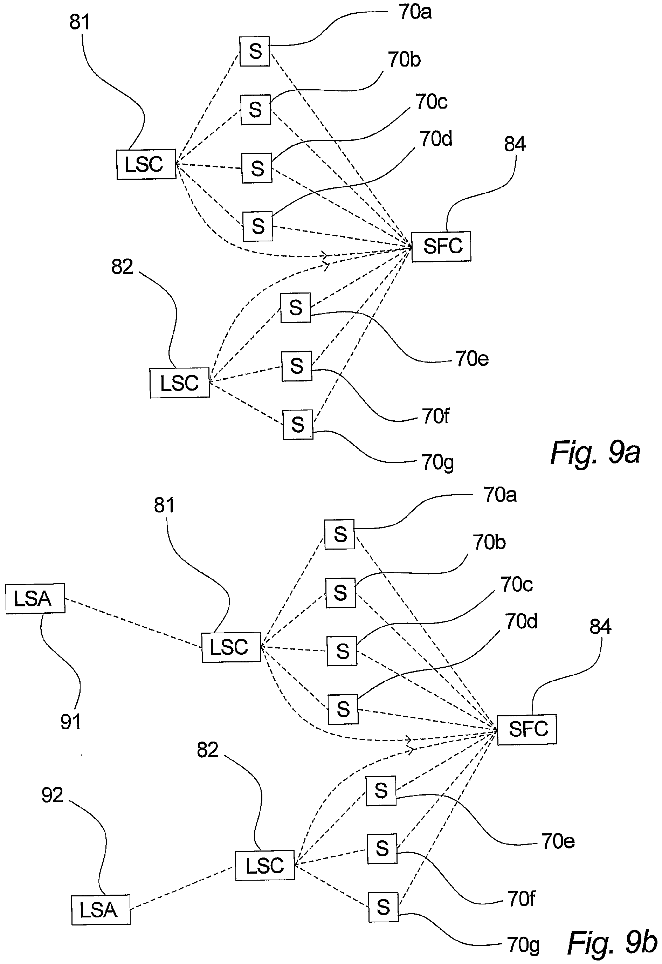

In order to further explain such an embodiment of the invention, reference is made to fig. 9a, where a system according to the invention is shown in a schematic manner.

A number of slave units (S) 70a - 70g, e.g. actuators for devices controlled by the system are shown, and for the purpose of controlling these three master units 81, 82 and 84 are shown, e.g. in the form of two Lifestyle Scenario controllers (LSC) 81 and 82 and a Smart Function controller (SFC) 84. It is apparent that further master units, e.g. remote controls, may be present for controlling the system. Furthermore, it is noted that the controllers 81, 82 and 84 may be in the form of a general master unit, e.g. a master remote control that may be configured for serving as a Lifestyle Scenario controllers (LSC) and/or a Smart Function controller (SFC). It is also apparent that a Lifestyle Scenario controller (LSC), e.g. 81 and a Smart Function controller (SFC), e.g. 84, may be incorporated in one and the same master unit, e.g. a general master unit remote control for the system, and that such a master unit may serve as several Lifestyle Scenario controllers (LSC) and/or Smart Function controllers (SFC).

For the sake of clarity, only the slave units 70a - 70g have been shown in fig. 9a, but other devices and components may as also described above be comprised in a system in accordance with the invention, for example sensors for providing input signals for the system such as temperature measurements or indications, light measurements, CO₂ content of the air, wind speed sensors etc.

As shown, the Smart Function controller (SFC) 84 may serve to control all slave units 70a - 70g in the system, but it may be configured for controlling only some of these, meaning that it may be configured as being a global type controller or as a local type controller. The Smart Function controller (SFC) 84 may serve to run an application programme, i.e. a first type application programme that may be executed in the background, e.g. without input requirements on the part of the user, for example the opening and closing of windows that may be performed on the basis of timer inputs, e.g. on a regular basis, and/or on the basis of e.g. temperature sensing means, for example for providing a natural and/or regular ventilation of one or more rooms or a house.

A Smart Function controller (SFC) may be provided by e.g. the manufacturer of the system and may serve to handle general functionalities that are common to most users and applications, thereby serving to solve e.g. daily routine control situations. Such a Smart Function controller (SFC) may be available, e.g. provided as options, to the user, when the necessary devices and components are present in the system in question.

A Lifestyle Scenario controller (LSC) 81 or 82 may serve to run a second type application programme, e.g. for executing a sequential transmission of control signals in relation to an initiation indication, e.g. a manual activation, input from sensor means, a timer input etc., e.g. executed in dependence on e.g. a particular occurrence such as e.g. a keypad manipulation, an input from sensor means, etc. and such an application programme may be confined to a limited period, e.g. for example being limited to actions taking place in a period of 24 hours.

As shown in fig. 9a, such a Lifestyle Scenario controller (LSC) 81 or 82 may relate to part of a complete system table, e.g. for performing as a local subtype (LLS) relating to e.g. a zone, a sector, a room or the like of the system. Thus, it is shown that the LSC 81 is configured for controlling the slave units 70a - 70d and that the LSC 82 is configured for controlling the slave units 70e - 70g. As explained above, both may also be related to sensors and/or other input means.

A local subtype (LLS) application programme, e.g. a local Lifestyle Scenario may be defined and configured for being activated by a key input by the user. For example, when the user presses a 'Wake up' button in his/her room, the following tasks may be performed:
- the sun screening in the bedroom is raised slightly and the lights are turned on to create a soft light.
- in the bathroom the lights are turned on.
- after a while the sun screening is raised and the bedroom is ventilated while the user is in the shower.

Other rooms in the house will not be influenced by such a Lifestyle Scenario.

Thus, the two shown LSC's 81 and 82 may serve to run such local Lifestyle Scenarios.

A Lifestyle Scenario controller (LSC) may also relate to a complete system table, in which case it will be referred to as executing a global subtype (GLS) application programme. For example, when the user leaves the house with his/her family for summer holidays, the user may activate e.g. the 'Vacation' Lifestyle Scenario that may perform the tasks that all windows and rolling shutters are being closed, the heating is put in an economy level throughout the house, all lights are turned off, the garage door and the door lock are closed and the sun screenings are retracted or rolled-out, depending on the type of sun screening and the preferences of the user. Global Lifestyle Scenarios GLS are according to this embodiment always running until the next global Lifestyle Scenario GLS is activated, i.e. meaning that no time period restrictions are involved.

In general, the Lifestyle Scenarios may be provided by e.g. the manufacturer of the system, e.g. based on knowledge of typical control patterns and daily routine operation performed in e.g. home automation systems, and such Lifestyle Scenarios may be provided to the user, depending on the type of equipment comprised in the system. Such Lifestyle Scenarios may be modified by the user, for example as regards parameters such as time, temperature etc. and/or devices involved in the operation. Furthermore, the user may possibly define Lifestyle Scenarios on his/her own.

In accordance with a particular embodiment, parameters for a first type application programme (SF) being executed by a SFC may be influenced by a second type application programme LSC being executed concurrently. For example, all day the global second type application programme LS "Arrive" (equals the house being in normal mode) has been running allowing all enabled first type application programmes SF to be executed on all relevant slave units, e.g. actuators throughout the house. When the child is put to sleep the local Lifestyle Scenario (LLS) "Good night" in his/her room is activated where after the local slave units are adjusted according to the Lifestyle Scenario (LS) settings. Now also the Smart Functions (SF's) automatic functionality is blocked to ensure the peace and good sleep of the child, e.g. no disturbances. The re-allowance of Smart Functions (SF's) in the children room is not accepted until the Lifestyle Scenario (LS) period has elapsed, for example the next morning. Thus, as shown in fig. 8a, when a Lifestyle Scenario is being executed, a transmission is communicated to the Smart Function controller (SFC) 84 in the system from the relevant Lifestyle Scenario controller (LSC) 81 or 82.

When operating a system, priorities may be provided for, e.g. in order to maintain a logical functionality of the system and in order to prevent confusing collisions between different application programmes.

In accordance with a particular embodiment, the system may be configured for executing only one global subtype application programme (GLS) at any time. Thus, the system may be configured for having the last activated global LS override the previous one.

Furthermore, activating a global Lifestyle Scenario GLS will override all local Lifestyle Scenarios LLS running at that instant and, as described above, affect Smart Functions SF on all slave units, e.g. actuators within the house defined in the Smart Functions (SFs).

Furthermore, any manually activated operation will be executed and may be performed without interfering with the execution of e.g. a Smart Function. Thus, if a window has been opened as part of the operations performed by a Smart Function or a Lifestyle Scenario, and the user wishes to close the window because the draft or noise is annoying the user, this may be performed with the use of e.g. a remote control without otherwise interfering with the Smart Function or the Lifestyle Scenario

In general, it may be defined that a slave unit will always respond to the latest received control signal, no matter whether this stems from a Smart Function, a Lifestyle Scenario or a manual activation.

Other manners of establishing a priority between different application programmes and/or control signals may be provided. For example, the slave units may be adapted for establishing a table for handling of priorities relating to received input signals such as control signals, sensor signals etc., said table facilitating a prioritizing of said application programmes of predetermined different types. Hereby, it is achieved that the different types of application programmes may be executed in a relatively simple manner, e.g. by assigning different priority levels to the different control signals relating to different types, e.g. SF's, LS's, GLS's, LLS's, thereby facilitating the necessary and/or predefined prioritizing between these different programmes. This may be relevant when two or more Smart Functions are running in the system and/or when one or more local Lifestyle Scenarios are running, which also may take place at the same time as a global Lifestyle Scenario is being executed, in which case one and the same slave unit may receive commands, also different commands, from different application programmes. In such cases the priorities may be handled in the system as such, e.g. by means of the priorities related to the signals received at the individual slave units and by means of the handling tables comprised in e.g. each of the slave units.

A further aspect of the invention is illustrated in fig. 9b, which corresponds to fig. 9a, but where a Lifestyle Scenario Activator (LSA) 91 and 92 is shown.

Such a LSA 91 or 92 may be provided as a remote control comprising a limited functionality, e.g. a remote control that serves to send a signal to a master unit, e.g. a master unit comprising a Lifestyle Scenario Controller LSC for initiating a Lifestyle Scenario. For example, the LSA 91 may be assigned to the LSC 81, and the LSA may be assigned to the LSC 82 as shown. Each LSA can only activate the LSC, to which it is assigned, and can only initiate a single or few Lifestyle Scenarios. A LSA may be provided, for example in the form of a simple one-button key ring controller or the like. Such an activator may be used when the user comes home, e.g. for operating e.g. entrance or garage doors and for initiating other operations comprised in the Lifestyle Scenario e.g. "Coming Home", for example the opening of windows for ventilation, turning on of light, operation of curtains and/or the like.

Thus, a LSA may be seen as an operating key, e.g. a programme key, that has been "removed" from the regular master unit and may be carried independently. Such a LSA may be configured for operating only one-way and, as described above, only in connection with a particular Lifestyle Scenario controller.

It will be understood that the invention is not limited to the particular examples described above and illustrated in the drawings but may be modified in numerous manners and used in a variety of applications within the scope of the invention as specified in the claims.

## Claims

1. System comprising at least one master unit (25; 81, 82, 84) and a plurality of slave units (70a-70g), said master unit and said slave units comprising means for performing communication via radio frequency channels, wherein said at least one master unit comprises means for transmitting control signals to said slave units, said slave units each being provided with a unique address and each being associated with a controllable device (41, 43, 45), wherein said at least one master unit (25; 81, 82, 84) comprises means for executing a sequential transmission of control signals to at least one of said slave units (70a-70g), and **characterized in that**
- said at least one master unit is adapted for executing said sequential transmission of control signals to at least one of said slave units in response to an initiation indication, that
- said master unit comprises timing means for facilitating delayed execution of said transmission of control signals, and that
- said master unit comprises timing means for facilitating an execution of said transmission of control on a real time base scale, **characterized in that** said system is adapted for assigning said execution of a sequential transmission of control signals to one of at least two predetermined types of application programmes (61-68),
- wherein said at least two types of application programmes comprise a first type (SF) application programme for executing said sequential transmission of control signals on routine basis in relation to a real time scale and
- wherein said at least two types of application programmes comprise a second type (LS) application programme for executing said sequential transmission of control signals in relation to an initiation indication.

2. System according to claim 1, wherein said master unit (25; 81, 82, 84) comprises storage means for information related to said sequential transmissions comprising information related to addresses for specified slave units, control information or time information.

3. System according to claim 1 or 2, wherein said initiation indication is a manual activation, input from sensor means or a timer input.

4. System according to claim 3, wherein said second type application programme (LS) relates to a complete system table, e.g. for performing as a global subtype application programme (GLS).

5. System according to claim 3, wherein said second type application programme (LS) relates to part of a complete system table, e.g. for performing as a local subtype (LLS) relating to e.g. a zone (35, 52), a sector or a room (3, 4, 5) of the system.

6. System according to one or more of claims 1 to 5, wherein parameters for a first type application programme (SF) being executed are influenced by a second type application programme (LS) being executed concurrently.

7. System according to one or more of claims 1 to 6, wherein said first type application programme (SF) is activated or deactivated by at least one of a manual activation, a sensor input including a timer input, an input from a master control executing a sequential transmission of control signals of said second type application programme (LS).

8. System according to one or more of claims 1 to 6, wherein said second type application programme (LS) is activated by an input from a master control (25; 81, 82, 84) executing a sequential transmission of control signals of said second type application programme (LS).

9. System according to one or more of claims 4 to 8, wherein said system is configured for executing only one global subtype application programme (GLS) at any time.

10. System according to one or more of claims 1 to 9, wherein said system is adapted for establishing a prioritizing of said application programmes (61-68) being executed, e.g. said first and second types and/or said subtypes.

11. System according to claim 10, wherein said plurality of slave units are adapted for establishing a table for handling of priorities relating to received input signals such as control signals or sensor signals, said table facilitating a prioritizing of said application programmes of predetermined different types, e.g. first type (SF) application programme and second type (LS) application programme, in said system.

12. System according to any of the preceding claims, wherein said slave units are configured for transmitting an acknowledgement signal to said master unit (25; 81, 82, 84) in response to the reception of a control signal.

13. System according to any of the preceding claims, wherein said master unit (25; 81, 82, 84) is configured for transmitting a status request signal to said slave units that have received a control signal and that said master unit is configured for transmitting said status request signal after a time delay corresponding to the time taken by the slave unit to perform an operation in response to the received control signal.

14. System according to any of the preceding claims, wherein said slave units are addressable by said master unit (25; 81, 82, 84) in a number of sectors, wherein said master unit further has means for allocating predefined identifications to said slave units, and wherein said master unit has display means (26), by means of which said predefined identifications may be displayed.

15. System according to any of the preceding claims, wherein said master unit (25; 81, 82, 84) is provided with at least one predefined sequential execution of control signals, said predefined sequence being executable upon manipulation of said function control key (27e, 27f).

16. System according to claim 15, wherein said master unit is configured for facilitating modifications of said at least one predefined sequential execution of control signals.

17. System according to claim 15 or 16, wherein said master unit is configured for receiving and storing one or more application programmes (61-68) comprising predefined sequential execution of control signals.

18. System according to claim 15, 16 or 17, wherein said master unit is configured for comprising one or more application programmes (61-68) comprising predefined sequential execution of control signals, wherein said master unit is configured for activating one or more of said programmes in dependence on properties of the system and in dependence of an approval.

19. System according to one or more of claims 1 to 18, wherein said initiation indication comprises an activation of a function control key (27e, 27f), a timer signal or a control signal received from a controller or a sensor.

20. System according to any of the preceding claims, wherein said master unit comprises means for recording and storing a number of sequences corresponding to sequential transmission of control signals, said means comprising the use of at least one function control key (27e, 27f).

21. System according to claim 20, wherein said master unit is configured for executing a sequence corresponding to sequential transmission of control signals by manipulating said at least one function control key (27e, 27f).and wherein said master unit is configured for executing at specific sequence in dependence on the manner, in which said function control key is manipulated, e.g. the number of times the key is pushed.

22. System according to claim 20 or 21, wherein said master unit is configured for executing a sequence corresponding to sequential transmission of control signals by manipulating said at least one function control key and wherein said master unit is configured for executing a specific sequence in dependence on manipulation of said function control key, and wherein the stored sequences are activated cyclically.

23. System according to claim 20, 21 or 22, wherein said master unit is configured for assigning a label, e.g. a number or name to stored sequence corresponding to sequential transmission of control signals, and wherein a renaming is facilitated.

24. System according to one or more of claims 20 to 23, wherein said master unit is configured for facilitating the deletion of a stored sequence corresponding to sequential transmission of control signals, whereby the label or name is deleted without influencing on other labels or names.

25. System according to any of the preceding claims, wherein said master unit is configured for facilitating an editing of a stored sequence corresponding to sequential transmission of control signals.

26. System according to any of the preceding claims, wherein said system comprises at least one further master unit in the form of an application programme activator such as for example a second type application programme (LS) activator, e.g. a Lifestyle Scenario Activator (LSA).

27. Use of system according to one or more of claims 1 - 26 for control of operable devices such as windows (10, 11, 12, 13, 14, 15, 16; 40), doors, screening devices (20, 21, 22, 23; 42, 44) or lights in buildings.

28. Use according to claim 27 for performing automatic operation of the operable devices, e.g. in a home automation system.

29. Use according to claim 27 for performing automatic sequential operation of the operable devices, e.g. in a home automation system.

30. Use according to claim 27 for performing automatic sequential and mutual prioritized operation of the operable devices, e.g. in a home automation system.

31. Use according to claim 27 for performing automatic operation of the operable devices, e.g. in a home automation system, in a manner allowing repetitive sequential operations as well as sequential operations requiring an initiation command each time it is wished to perform such an operation.

## Patentansprüche

1. System, das wenigstens eine Mastereinheit (25; 81, 82, 84) und mehrere Slaveeinheiten (70a - 70g) umfasst, wobei die Mastereinheit und die Slaveeinheiten ein Mittel zum Ausführen einer Kommunikation über Funkfrequenzkanäle umfassen und wobei die wenigstens eine Mastereinheit ein Mittel zur Übertragung von Steuersignalen zu den Slaveeinheiten umfasst, wobei von den Slaveeinheiten jede mit einer eindeutigen Adresse ausgestattet ist und jede einer steuerbaren Vorrichtung (41, 43, 45) zugeordnet ist, wobei die wenigstens eine Mastereinheit (25; 81, 82, 84) ein Mittel zur Ausführung einer sequenziellen Übertragung von Steuersignalen zu wenigstens einer der Slaveeinheiten (70a - 70g) umfasst,
und **dadurch gekennzeichnet ist, dass**:
- die wenigstens eine Mastereinheit dafür eingerichtet ist, die sequenzielle Übertragung von Steuersignalen zu wenigstens einer der Slaveeinheiten in Reaktion auf eine Aktivierungsanweisung auszuführen, dass
- die Mastereinheit ein Zeitsteuerungsmittel umfasst, um eine verzögerte Ausführung der Übertragung von Steuersignalen zu unterstützen, und dass
- die Mastereinheit ein Zeitsteuerungsmittel umfasst, um eine Ausführung der Übertragung einer Steuerung in einem Echtzeitbasisrahmen zu unterstützen,
**dadurch gekennzeichnet, dass** das System dafür eingerichtet ist, die Ausführung einer sequenziellen Übertragung von Steuersignalen einem von wenigstens zwei vorgegebenen Typen von Anwendungsprogrammen (61 - 68) zuzuordnen,
- wobei die wenigstens zwei Typen von Anwendungsprogrammen einen ersten Typ (SF) von Anwendungsprogrammen umfassen, um die sequenzielle Übertragung von Steuersignalen auf einer regelmäßigen Basis entsprechend einem Echtzeitrahmen auszuführen, und
- wobei die wenigstens zwei Typen von Anwendungsprogrammen einen zweiten Typ (LS) von Anwendungsprogrammen umfassen, um die sequenzielle Übertragung von Steuersignalen im Zusammenhang mit einer Aktivierungsanweisung auszuführen.

2. System nach Anspruch 1, wobei die Mastereinheit (25; 81, 82, 84) ein Speichermittel für Information umfasst, die die sequenziellen Übertragungen betrifft und die Information umfasst, die Adressen für bestimmte Slaveeinheiten, Steuerinformation oder Zeitinformation betrifft.

3. System nach Anspruch 1 oder 2, wobei die Aktivierungsanweisung eine manuelle Aktivierung, eine Eingabe von einem Sensormittel oder eine Zeitsteuerungseingabe ist.

4. System nach Anspruch 3, wobei der zweite Typ von Anwendungsprogrammen (LS) eine vollständige Systemtabelle betrifft, beispielsweise um als ein Anwendungsprogramm vom globalen Untertyp (GLS) zu arbeiten.

5. System nach Anspruch 3, wobei der zweite Typ von Anwendungsprogrammen (LS) einen Teil einer vollständigen Systemtabelle betrifft, beispielsweise um als ein lokaler Untertyp (LLS) zu arbeiten, der beispielsweise eine Zone (35, 52), einen Sektor oder einen Raum (3, 4, 5) des Systems betrifft.

6. System nach einem oder mehreren der Ansprüche 1 bis 5, wobei Parameter für ein Anwendungsprogramm vom ersten Typ (SF), das ausgeführt wird, durch ein Anwendungsprogramm vom zweiten Typ (LS) beeinflusst werden, das gleichzeitig ausgeführt wird.

7. System nach einem oder mehreren der Ansprüche 1 bis 6, wobei das Anwendungsprogramm vom ersten Typ (SF) durch wenigstens eines von einer manuellen Aktivierung, einer Sensoreingabe, die eine Zeitsteuerungseingabe umfasst, und einer Eingabe von einer Mastersteuerung, die eine sequenzielle Übertragung von Steuersignalen des Anwendungsprogramms vom zweiten Typ (LS) ausführt, aktiviert oder deaktiviert wird.

8. System nach einem oder mehreren der Ansprüche 1 bis 6, wobei das Anwendungsprogramm vom zweiten Typ (LS) durch eine Eingabe von einer Mastersteuerung (25; 81, 82, 84) aktiviert wird, die eine sequenzielle Übertragung von Steuersignalen des Anwendungsprogramms vom zweiten Typ (LS) ausführt.

9. System nach einem oder mehreren der Ansprüche 4 bis 8, wobei das System dafür eingerichtet ist, zu jedem Zeitpunkt nur ein Anwendungsprogramm vom globalen Untertyp (GLS) auszuführen.

10. System nach einem oder mehreren der Ansprüche 1 bis 9, wobei das System dafür ausgestaltet ist, eine Priorisierung der ausgeführten Anwendungsprogramme (61 - 68) einzurichten, beispielsweise der ersten und zweiten Typen und/oder Untertypen.

11. System nach Anspruch 10, wobei die mehreren Slaveeinheiten dafür ausgestaltet sind, eine Tabelle zur Behandlung von Prioritäten einzurichten, die empfangene Eingangssignale, wie etwa Steuersignale oder Sensorsignale, betreffen, wobei die Tabelle eine Priorisierung der Anwendungsprogramme von vorgegebenen verschiedenen Typen im System unterstützt, beispielsweise Anwendungsprogramms vom ersten Typ (SF) und Anwendungsprogramms vom zweiten Typ (LS).

12. System nach einem der vorhergehenden Ansprüche, wobei die Slaveeinheiten dafür eingerichtet sind, in Reaktion auf den Empfang eines Steuersignals ein Bestätigungssignal an die Mastereinheit (25; 81, 82, 84) zu übertragen.

13. System nach einem der vorhergehenden Ansprüche, wobei die Mastereinheit (25; 81, 82, 84) dafür eingerichtet ist, ein Statusanfragesignal an die Slaveeinheiten zu senden, die ein Steuersignal empfangen haben, und wobei die Mastereinheit dafür eingerichtet ist, das Statusanfragesignal nach einer zeitlichen Verzögerung zu senden, die der Zeitspanne entspricht, die von der Slaveeinheit benötigt wird, um in Reaktion auf das empfangene Steuersignal eine Operation auszuführen.

14. System nach einem der vorhergehenden Ansprüche, wobei die Slaveeinheiten von der Mastereinheit (25; 81, 82, 84) in einer Zahl Sektoren adressiert werden könne und wobei die Mastereinheit außerdem ein Mittel hat, um den Slaveeinheiten vordefinierte Kennungen zuzuordnen, wobei die Mastereinheit ein Anzeigemittel (26) hat, mittels dessen die vordefinierten Kennungen angezeigt werden können.

15. System nach einem der vorhergehenden Ansprüche, wobei die Mastereinheit (25; 81, 82, 84) mit wenigstens einer vordefinierten sequenziellen Ausführung von Steuersignalen ausgestattet ist und wobei die vordefinierte Sequenz nach der Bedienung der Funktionssteuertaste (27e, 27f) ausführbar ist.

16. System nach Anspruch 15, wobei die Mastereinheit dafür eingerichtet ist, Modifikationen der wenigstens einen vordefinierten sequenziellen Ausführung von Steuersignalen zu unterstützen.

17. System nach Anspruch 15 oder 16, wobei die Mastereinheit dafür eingerichtet ist, ein oder mehrere Anwendungsprogramme (61 - 68) zu empfangen und zu speichern, die eine vordefinierte sequenzielle Ausführung von Steuersignalen umfassen.

18. System nach Anspruch 15, 16 oder 17, wobei die Mastereinheit dafür eingerichtet ist, ein oder mehrere Anwendungsprogramme (61 - 68) zu umfassen, die eine vordefinierte sequenzielle Ausführung von Steuersignalen umfassen, wobei die Mastereinheit dafür eingerichtet ist, in Abhängigkeit von Eigenschaften des Systems und in Abhängigkeit von einer Freigabe eines oder mehrere der Programme zu aktivieren.

19. System nach einem oder mehreren der Ansprüche 1 bis 18, wobei die Aktivierungsanweisung eine Aktivierung einer Funktionssteuertaste (27e, 27f), ein Zeitsteuerungssignal oder ein Steuersignal, das von einer Steuerung oder einem Sensor empfangen wird, umfasst.

20. System nach einem der vorhergehenden Ansprüche, wobei die Mastereinheit ein Mittel zum Aufzeichnen und Speichern einer Zahl von Sequenzen umfasst, die einer sequenziellen Übertragung von Steuersignalen entsprechen, wobei das Mittel die Verwendung wenigstens einer Funktionssteuertaste (27e, 27f) umfasst.

21. System nach Anspruch 20, wobei die Mastereinheit dafür eingerichtet ist, durch die Bedienung der wenigstens einen Funktionssteuertaste (27e, 27f) eine Sequenz auszuführen, die einer sequenziellen Übertragung von Steuersignalen entspricht, und wobei die Mastereinheit dafür eingerichtet ist, in Abhängigkeit von der Art, in der die Funktionssteuertaste bedient wird, beispielsweise der Anzahl, mit der die Taste gedrückt wird, eine bestimmte Sequenz auszuführen.

22. System nach Anspruch 20 oder 21, wobei die Mastereinheit dafür eingerichtet ist, durch die Bedienung der wenigstens einen Funktionssteuertaste eine Sequenz auszuführen, die einer sequenziellen Übertragung von Steuersignalen entspricht, und wobei die Mastereinheit dafür eingerichtet ist, in Abhängigkeit von der Bedienung der Funktionssteuertaste eine bestimmte Sequenz auszuführen, und wobei die gespeicherten Sequenzen zyklisch aktiviert werden.

23. System nach Anspruch 20, 21 oder 22, wobei die Mastereinheit dafür eingerichtet ist, einer gespeicherten Sequenz, die einer sequenziellen Übertragung von Steuersignalen entspricht, eine Bezeichnung zuzuordnen, beispielsweise eine Zahl, und wobei eine Umbenennung unterstützt wird.

24. System nach einem oder mehreren der Ansprüche 20 bis 23, wobei die Mastereinheit dafür eingerichtet ist, das Löschen einer gespeicherten Sequenz zu unterstützen, die einer sequenziellen Übertragung von Steuersignalen entspricht, wobei die Bezeichnung oder der Name gelöscht werden, ohne andere Bezeichnungen oder Namen zu beeinflussen.

25. System nach einem der vorhergehenden Ansprüche, wobei die Mastereinheit dafür eingerichtet ist, das Bearbeiten einer gespeicherten Sequenz, einer sequenziellen Übertragung von Steuersignalen entspricht, zu unterstützen.

26. System nach einem der vorhergehenden Ansprüche, wobei das System wenigstens eine weitere Mastereinheit in Form eines Aktivierers für Anwendungsprogramme umfasst, wie etwa einen Aktivierer für den zweiten Typ von Anwendungsprogrammen (LS), beispielsweise einen Lifestyle-Szenario-Aktivierer (LSA).

27. Verwendung eines Systems nach einem oder mehreren der Ansprüche 1 bis 26 zur Steuerung bedienbarer Vorrichtungen, wie etwa Fenstern (10, 11, 12, 13, 14, 15, 16; 40), Türen, Abschirmvorrichtung (20, 21, 22, 23; 42, 44) oder Lichtern in Gebäuden.

28. Verwendung nach Anspruch 27 zum Ausführen einer automatischen Bedienung der bedienbaren Vorrichtungen, beispielsweise in einem Heimautomatisierungssystem .

29. Verwendung nach Anspruch 27 zum Ausführen einer automatischen sequenziellen Bedienung der bedienbaren Vorrichtungen, beispielsweise in einem Heimautomatisierungssystem .

30. Verwendung nach Anspruch 27 zum Ausführen einer automatischen sequenziellen und untereinander priorisierten Bedienung der bedienbaren Vorrichtungen, beispielsweise in einem Heimautomatisierungssystem.

31. Verwendung nach Anspruch 27 zum Ausführen einer automatischen Bedienung der bedienbaren Vorrichtungen, beispielsweise in einem Heimautomatisierungssystem, in einer Art, die wiederholte sequenzielle Bedienungen ebenso gestattet wie sequenzielle Bedienungen, die jedes Mal, wenn es gewünscht ist eine solche Bedienung auszuführen, einen Aktivierungsbefehl benötigen.

## Revendications

1. Système comprenant au moins une unité maîtresse (25 ; 81, 82, 84) et une pluralité d'unités esclaves (70a-70g), ladite unité maîtresse et lesdites unités esclaves comprenant des moyens pour effectuer une communication via des canaux de fréquence radio, dans lequel ladite au moins une unité maîtresse comprend des moyens pour transmettre des signaux de commande auxdites unités esclaves, lesdites unités esclaves étant munies chacune d'une adresse unique et chacune étant associée à un dispositif pouvant être commandé (41, 43, 45), dans lequel ladite au moins une unité maîtresse (25 ; 81, 82, 84) comprend des moyens pour exécuter une transmission séquentielle de signaux de commande à au moins une desdites unités esclaves (70a-70g), et **caractérisé en ce que**
- ladite au moins une unité maîtresse est adaptée pour exécuter ladite transmission séquentielle de signaux de commande à au moins une desdites unités esclaves en réponse à une indication de lancement, **en ce que**
- ladite unité maîtresse comprend des moyens de synchronisation pour faciliter une exécution retardée de ladite transmission de signaux de commande, et **en ce que**
- ladite unité maîtresse comprend des moyens de synchronisation pour faciliter une exécution de ladite transmission de commande sur une échelle de base de temps réel,
**caractérisé en ce que**
ledit système est adapté pour attribuer ladite exécution d'une transmission séquentielle de signaux de commande à l'un d'au moins deux types prédéterminés de programmes d'application (61-68),
- dans lequel lesdits au moins deux types de programmes d'application comprennent un programme d'application de premier type (SF) pour exécuter ladite transmission séquentielle de signaux de commande sur une base régulière en relation à une échelle de temps réel et
- dans lequel lesdits au moins deux types prédéterminés de programmes d'application comprennent un programme d'application de deuxième type (LS) pour exécuter ladite transmission séquentielle de signaux de commande en relation à une indication de lancement.

2. Système selon la revendication 1, dans lequel ladite unité maîtresse (25 ; 81, 82, 84) comprend des moyens de stockage pour des informations relatives auxdites transmissions séquentielles comprenant des informations relatives à des adresses pour des unités esclaves spécifiques, des informations de commande ou des informations de temps.

3. Système selon la revendication 1 ou 2, dans lequel ladite indication de lancement est une activation manuelle, une entrée provenant de moyens de détection ou une entrée de minuterie.

4. Système selon la revendication 3, dans lequel ledit programme d'application de deuxième type (LS) est lié à une partie d'une table de système complet, par exemple pour effectuer un programme d'application de sous-type global (GLS).

5. Système selon la revendication 3, dans lequel ledit programme d'application de deuxième type (LS) est lié à une table de système complet, par exemple pour effectuer un sous-type local (LLS) se rapportant par exemple à une zone (35, 52), un secteur ou une pièce (3, 4, 5) du système.

6. Système selon une ou plusieurs des revendications 1 à 5, dans lequel des paramètres pour un programme d'application de premier type (SF) en cours d'exécution sont influencés par un programme d'application de deuxième type (LS) en cours d'exécution en même temps.

7. Système selon une ou plusieurs des revendications 1 à 6, dans lequel ledit programme d'application de premier type (SF) est activé ou désactivé par au moins une parmi une activation manuelle, une entrée de capteur comprenant une entrée de minuterie, une entrée provenant d'une commande maîtresse exécutant une transmission séquentielle de signaux de commande dudit programme d'application de deuxième type (LS).

8. Système selon une ou plusieurs des revendications 1 à 6, dans lequel ledit programme d'application de deuxième type (LS) est activé par une entrée provenant d'une commande maîtresse (25 ; 81, 82, 84) exécutant une transmission séquentielle de signaux de commande dudit programme d'application de deuxième type (LS).

9. Système selon une ou plusieurs des revendications 4 à 8, dans lequel ledit système est configuré pour exécuter un seul programme d'application de sous-type global (GLS) à la fois.

10. Système selon une ou plusieurs des revendications 1 à 9, dans lequel ledit système est adapté pour établir une priorisation desdits programmes d'application (61-68) qui sont exécutés, par exemple lesdits premier et deuxième types et/ou lesdits sous-types.

11. Système selon la revendication 10, dans lequel ladite pluralité d'unités esclaves est adaptée pour établir une table pour la gestion de priorités relatives à des signaux d'entrée reçus tels que des signaux de commande ou des signaux de capteur, ladite table facilitant une priorisation desdits programmes d'application de différents types prédéterminés, par exemple un programme d'application de premier type (SF) et un programme d'application de deuxième type (LS), dans ledit système.

12. Système selon l'une quelconque des revendications précédentes, dans lequel lesdites unités esclaves sont configurées pour transmettre un signal d'accusé de réception à ladite unité maîtresse (25 ; 81, 82, 84) en réponse à la réception d'un signal de commande.

13. Système selon l'une quelconque des revendications précédentes, dans lequel ladite unité maîtresse (25 ; 81, 82, 84) est configurée pour transmettre un signal de demande d'état auxdites unités esclaves qui ont reçu un signal de commande et ladite unité maîtresse est configurée pour transmettre ledit signal de demande d'état après un temps de retard correspondant au temps pris par l'unité esclave pour exécuter une opération en réponse au signal de commande reçu.

14. Système selon l'une quelconque des revendications précédentes, dans lequel lesdites unités esclaves sont adressables par ladite unité maîtresse (25 ; 81, 82, 84) dans un nombre de secteurs, dans lequel ladite unité maîtresse comprend en outre des moyens pour attribuer des identifications prédéfinies auxdites unités esclaves, et dans lequel ladite unité maîtresse comprend des moyens d'affichage (26), au moyen desquels lesdites identifications prédéfinies peuvent être affichées.

15. Système selon l'une quelconque des revendications précédentes, dans lequel ladite unité maîtresse (25 ; 81, 82, 84) est dotée d'au moins une exécution séquentielle prédéfinie de signaux de commande, ladite séquence prédéfinie pouvant être exécutée lors d'une manipulation de ladite touche de commande de fonction (27e, 27f).

16. Système selon la revendication 15, dans lequel ladite unité maîtresse est configurée pour faciliter des modifications de ladite au moins une exécution séquentielle prédéfinie de signaux de commande.

17. Système selon la revendication 15 ou 16, dans lequel ladite unité maîtresse est configurée pour recevoir et stocker un ou plusieurs programmes d'application (61-68) comprenant une exécution séquentielle prédéfinie de signaux de commande.

18. Système selon la revendication 15, 16 ou 17, dans lequel ladite unité maîtresse est configurée pour comprendre un ou plusieurs programmes d'application (61-68) comprenant une exécution séquentielle prédéfinie de signaux de commande, dans lequel ladite unité maîtresse est configurée pour activer un ou plusieurs desdits programmes en fonction de propriétés du système et en fonction d'une approbation.

19. Système selon une ou plusieurs des revendications 1 à 18, dans lequel ladite indication de lancement comprend une activation d'une touche de commande de fonction (27e, 27f), d'un signal de minuterie ou d'un signal de commande reçu à partir d'un dispositif de commande ou d'un capteur.

20. Système selon l'une quelconque des revendications précédentes, dans lequel ladite unité maîtresse comprend des moyens pour enregistrer et stocker un nombre de séquences correspondant à une transmission séquentielle de signaux de commande, lesdits moyens comprenant l'utilisation d'au moins une touche de commande de fonction (27e, 27f).

21. Système selon la revendication 20, dans lequel ladite unité maîtresse est configurée pour exécuter une séquence correspondant à une transmission séquentielle de signaux de commande par une manipulation de ladite au moins une touche de commande de fonction (27e, 27f), et dans lequel ladite unité maîtresse est configurée pour exécuter une séquence spécifique en fonction de la manière selon laquelle ladite touche de commande de fonction est manipulée, par exemple le nombre de fois que la touche est pressée.

22. Système selon la revendication 20 ou 21, dans lequel ladite unité maîtresse est configurée pour exécuter une séquence correspondant à une transmission séquentielle de signaux de commande par une manipulation de ladite au moins une touche de commande de fonction et dans lequel ladite unité maîtresse est configurée pour exécuter une séquence spécifique en fonction d'une manipulation de ladite touche de commande de fonction, et dans lequel les séquences stockées sont activées de manière cyclique.

23. Système selon la revendication 20, 21 ou 22, dans lequel ladite unité maîtresse est configurée pour attribuer une étiquette, par exemple un numéro ou un nom, à une séquence stockée correspondant à une transmission séquentielle de signaux de commande, et dans lequel un changement de nom est facilité.

24. Système selon une ou plusieurs des revendications 20 à 23, dans lequel ladite unité maîtresse est configurée pour faciliter la suppression d'une séquence stockée correspondant à une transmission séquentielle de signaux de commande, moyennant quoi l'étiquette ou le nom est supprimé sans influencer d'autres étiquettes ou noms.

25. Système selon l'une quelconque des revendications précédentes, dans lequel ladite unité maîtresse est configurée pour faciliter une édition d'une séquence stockée correspondant à une transmission séquentielle de signaux de commande.

26. Système selon l'une quelconque des revendications précédentes, dans lequel ledit système comprend au moins une autre unité maîtresse sous la forme d'un activateur de programme d'application comme par exemple un activateur de programme d'application de deuxième type (LS), par exemple un activateur de scénario de style de vie (LSA).

27. Utilisation d'un système selon une ou plusieurs des revendications 1 à 26 pour la commande de dispositifs actionnables tels que des fenêtres (10, 11, 12, 13, 14, 15, 16 ; 40), des portes, des dispositifs de blindage (20, 21, 22, 23 ; 42, 44) ou de lampes dans des bâtiments.

28. Utilisation selon la revendication 27 pour réaliser un fonctionnement automatique des dispositifs actionnables, par exemple dans un système de domotique.

29. Utilisation selon la revendication 27 pour réaliser un fonctionnement automatique séquentiel des dispositifs actionnables, par exemple dans un système de domotique.

30. Utilisation selon la revendication 27 pour réaliser un fonctionnement automatique priorisé séquentiel et mutuel des dispositifs actionnables, par exemple dans un système de domotique.

31. Utilisation selon la revendication 27 pour réaliser un fonctionnement automatique des dispositifs actionnables, par exemple dans un système de domotique d'une manière permettant des opérations séquentielles répétitives ainsi que des opérations séquentielles nécessitant une commande de lancement chaque fois qu'il est souhaité qu'une telle opération soit exécutée.
